# EUROPEAN PATENT APPLICATION

(11) **EP 1 974 993 A1**
(43) Date of publication of application: **01.10.2008**
(21) Application number: 08005466.1
(22) Date of filing: 25.03.2008
(51) Int. Cl.: B60P 1/44

(54) **Improved tailboard for a vehicle**

(30) Priority: 26.03.2007 BE 200700149
(71) Applicant: Dhollandia, Naamloze Vennootschap, 9111 Belsele (BE)
(72) Inventor: Dhollander, Jan, 9111 Belsele (BE)
(74) Representative: Donné, Eddy

(57) **Abstract**

Improved loading flap for a vehicle, whereby the loading flap (1) comprises a loading platform (8) which can tilt between a vertical transport position and a horizontal operating position, and which can be adjusted in height in the operating position, and whereby the loading platform (8) is provided with at least one safety gate (10), characterised in that the safety gate (10) can be folded out from an erect position into a folded-down position in the prolongation of the loading platform (8) and can be further pushed in or under the loading platform (8) as of this folded-down position into a storage position.

## Description

The present invention concerns an improved loading flap for a vehicle.

The present invention in particular concerns an improved loading flap provided with at least one safety gate.

More particularly, the invention concerns a loading flap of the type which is mounted or which can be mounted on a lorry opposite the access to the cargo space of the vehicle and which is designed to load and unload freights from the vehicle via said access.

As is known, such a loading flap comprises a loading platform which can usually tilt between a vertical transport position and a horizontal operating position, whereby in this operating position, the loading platform can be adjusted in height between a high operating position, whereby the loading platform is situated opposite the above-mentioned access to the cargo space in the extension of the loading floor of the vehicle, and a low operating position in which the loading platform is situated at ground level.

The loading flap may also be of the sliding loading flap type or a folding loading flap type.

Traditionally, loading flaps are provided with safety gates if support and/or additional safety is required when loading and unloading.

As the high operating position increases in height, said safety gates are all the more important to avoid accidents.

Loading flaps for vehicles which are provided with removable safety gates are already known. The vertical supporting posts of the safety gates are provided with pins, for example, fitting in cavities provided on the loading platform.

A disadvantage of such devices is that they are less stable than permanently provided safety gates and that, once removed, one does not know what to do with the safety gates. They can be fixed to the exterior of the vehicle, but they will be exposed to the elements then, and a rack or storage area will have to be provided for, resulting in additional costs, or they can be stored inside the vehicle, resulting in less cargo space, however.

Moreover, such safety gates often get lost as they are inattentively left behind after the loading and unloading, or they are even stolen.

Also loading flaps for vehicles that are provided with collapsible safety gates are already known, which are folded on top of the loading platform in the transport position of the loading flap, i.e. the top of the loading platform as seen from the operating position.

A disadvantage thereof is that, when the safety gates are not unfolded as no extra support or safety is required, one can easily trip over them when setting foot on the loading platform, which is hazardous of course, and which is disadvantageous to the efficiency of the loading and unloading process.

An additional disadvantage is that, when the loading flap also functions as a door to the cargo space and when the loading flap is in the transport position, the load may get caught in or come into contact with the folded safety gates, which may be harmful to the load or safety gates, and that the safety gates occupy part of the cargo space then.

Moreover, the hinges of such a safety gate must be placed more inwardly, which also occupies useful space of the loading platform.

Said safety gates must also be provided with a catch to keep the safety gates pressed against the loading platform when closing it. This catch may be tripped over and, in practice, it is frequently damaged, resulting in an expensive solution due to the working hours required for repairs.

Moreover, said safety gates are not appropriate for all types of loading flaps, and their mounting may give rise to problems.

The present invention aims to remedy one or several of the above-mentioned and other disadvantages.

To this end, the invention concerns an improved loading flap for a vehicle, whereby the loading flap comprises a loading platform which is provided with at least one safety gate, characterised in that the safety gate can fold out between an erect position, in particular an erect operating position, and a folded-down position in the prolongation of the loading platform, and in that the safety gate can collapse in or under the loading platform into a storage position as of the above-mentioned folded-down position.

An advantage of a device according to the invention is that one may choose to unfold the safety gates when loading and unloading in the operating position of the loading flap, and that the safety gates can be safely stored in or under the loading platform without any cargo space being lost or without any contact being made with the load in the transport position of the loading flap.

Moreover, a major advantage is that the loading flap in this case can also be a sliding or a folding loading flap with a collapsible platform.

An additional advantage in relation to the folding safety gates is that the stored safety gates do not hinder the loading and unloading; there is no tripping danger and the loading platform remains accessible, for example, to rolling loads or barrows or the like.

An additional advantage of a loading flap according to the invention in relation to removable safety gates is that they cannot be forgotten or stolen, that no storage features must be provided for and that they offer much more stability.

When the loading flap also functions as a door to the cargo space, the loading flap according to the invention is advantageous in that no cargo space is lost in the transport position, in that the loading flap is compatible with all types of rear landings and in that there can be no mechanical damage when closing, as the safety gates can be safely stored.

At least one safety gate is preferably provided with at least one hinge point around which the safety gate may hinge between an erect position and a folded-down position, from where the safety gate can be pushed into the storage position, in or under the loading platform.

In a preferred embodiment, a guide is fixed in or under the loading platform over or through which a slide may pass. The slide is connected to the safety gate at said hinge point, such that they can pass together between the folded-down position and the storage position.

In the most preferred embodiment, the safety gate is provided with locking means which are automatically activated by the gravitational force in the erect position of the safety gate.

As mentioned above, the storage position may be inside the loading platform, namely when the loading platform is partly or entirely hollow.

Moreover, a safety gate that is stored inside the loading platform is advantageous in that it is aesthetically superior and in that it is safely and invisibly stored away.

In order to better explain the characteristics of the invention, the following preferred embodiments of an improved loading flap with at least one safety gate according to the invention are described as an example only without being limitative in any way, with reference to the accompanying drawings, in which:
figure 1 schematically represents an improved loading flap with safety gates according to the invention, seen in perspective and with a partial omission, mounted on the rear of a lorry and with the safety gates in the erect position;
figure 2 represents the part indicated by F2 in figure 1 to a larger scale;
figure 3 is a cross section of figure 2 according to line III - III;
figures 4 and 5 are cross sections as in figure 3, but with the safety gate in the folded-down position in and the storage position respectively;
figure 6 shows an alternative embodiment of figure 1.

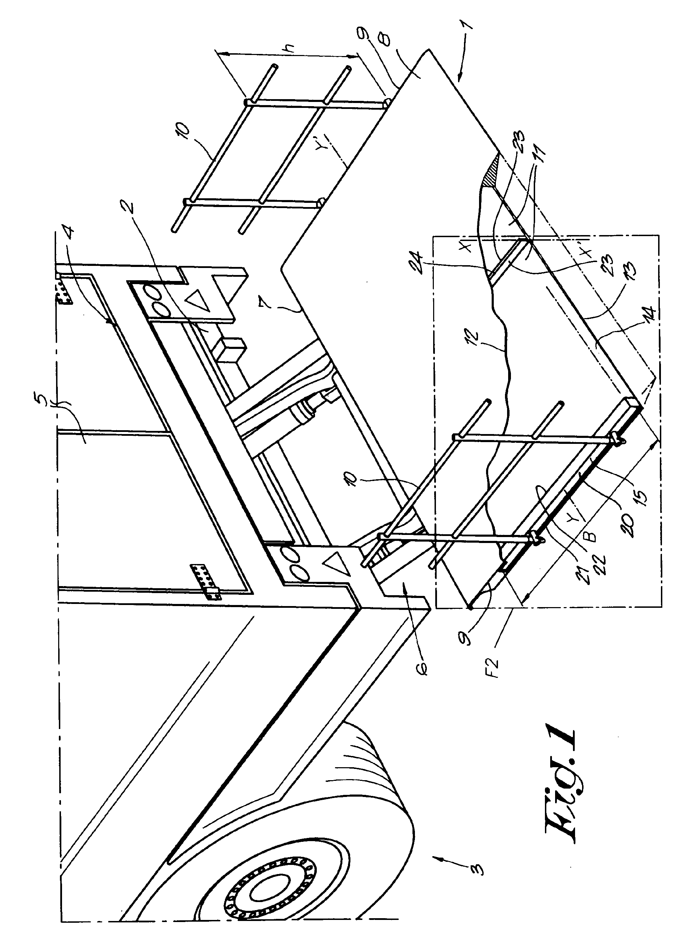

Figures 1 to 5 show the most preferred embodiment of the improved loading flap 1 according to the invention.

The loading flap 1 represented in figure 1 is fixed to the back of the frame 2 of a vehicle 3 which is provided with a cargo space 4 that can be closed with doors 5.

The loading flap 1 is adjustable in height by means of a lifting arm mechanism 6 and it can tilt around the lower edge 7 by means of a tilting or locking cylinder, not represented in the drawings.

The loading flap 1 according to the invention is provided with a loading platform 8 with two safety gates 10 on the side edges 9.

In figure 1, the loading platform 8 is provided with a hollow space 11 which is confined by the upper wall 12 and the lower wall 13 of the loading platform 8, whereby the upper wall 12 has been partly omitted in order to clearly show how the safety gate 10 is fixed to the loading platform 8.

An axial guide 14 runs as of every side edge 9 of the loading platform 8 in which is held a slide 15, whereby the guide 14 extends according to a direction Y - Y' crosswise to the side edges 9.

The slide 15 and the guide 14 have the same width B as the width of the hollow space 11 which is slightly larger than the width of the safety gate 10.

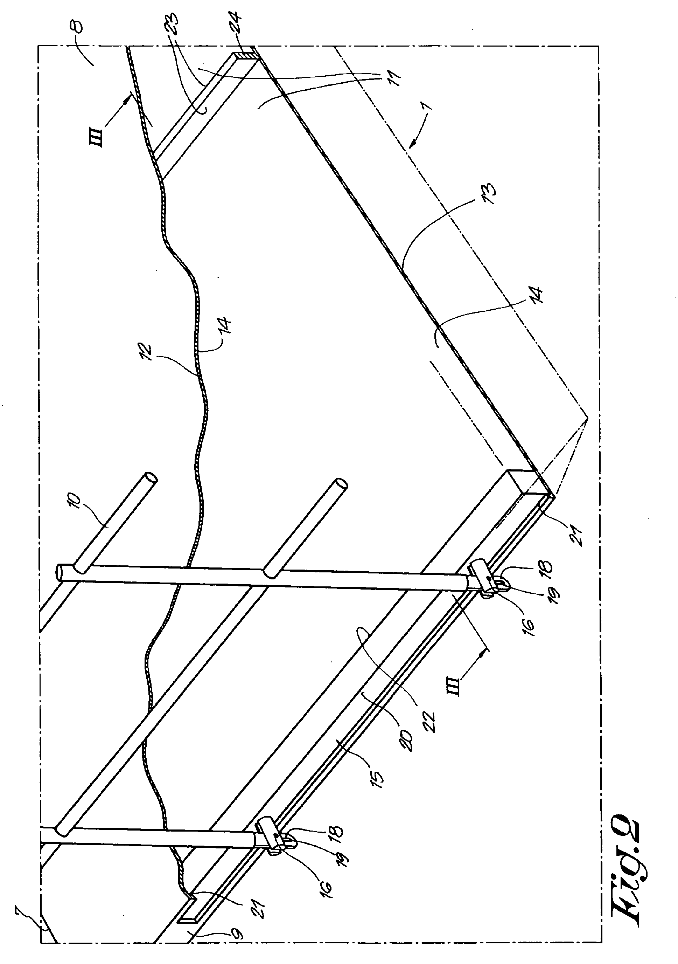

In the enlargement of figure 2, we see how the safety gate 10 is connected to the slide 15 at a hinge point 16, which slide 15 is provided with a spindle 17 enclosing the hinge point 16. The safety gate 10 is hereby provided with locking means 18 as the spindle 17 can work in conjunction with a shaft passage in the hinged far end of the safety gate 10 which is made in the shape of a slip hole 19.

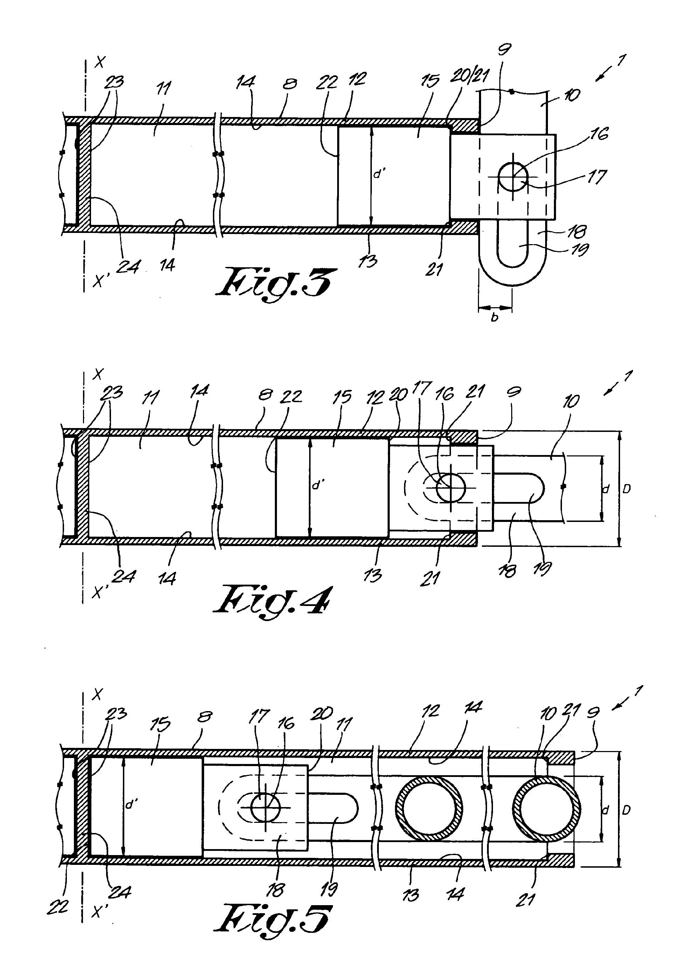

Figures 3, 4 and 5 show how the slide 15 is provided with a stop 20 which works in conjunction with a stop 21 on the side edge 9 of the loading platform 8 having a thickness D.

Figures 3 and 4 show how, in the erect position and folded-down position respectively, the stops 20 and 21 make contact in such a manner that the shaft of the hinge point 16 protrudes from the guide 14 over a distance b which is equal or about equal to half the thickness d of the safety gate 10.

Figures 3, 4 and 5 also show how the slide 15 is provided with a stop 22 which works in conjunction with a stop 23 near the innermost far end 24 of the guide 14 which is situated at a distance which is almost equal to the height h of the safety gate 10.

The working of the improved loading flap 1 according to the invention is very simple and as follows.

Figure 1 represents the loading flap 1 in its horizontal operating position, whereby the safety gate 10 is situated in the erect position at right angles to the loading platform 8.

The transition from the erect position as represented in figures 1 and 2 to the storage position as represented in figure 5 can be easily explained by means of figures 3 and 4.

Figure 3 shows how the locking means 18 in the form of a slip hole 19 prevent the safety gate 10 from swinging down and make sure that the safety gate 10 stays erect all by itself and can offer support.

In order to move into the folded-down position, the safety gate 10 is lifted over the slip hole 19 and folded down round the hinge point 10.

Figure 4 shows the same enlargement as in figure 3, but this time with the safety gate 10 in the folded-down position 15 whereby the safety gate 10 and the slide 15 are situated in each other's prolongation.

The stop 21 of the guide 14 on the side edge 9 of the loading platform 8 prevents the slide 15 and the safety gate 10 from being extended further than the hinge point 16.

As of the folded-down position, the slide 15 and the safety gate 10 can be telescoped in up to the stop 23 of the guide 14 into the storage position where the stop 22 of the slide 15 makes contact with the stop 23 of the guide 14 near the innermost far end 24 of the guide 14, as represented in figure 5.

It is clear that, once the slide 15 and the safety gate 10 have been partly pushed in the guide 14, the guide 14 will prevent the safety gate 10 from hinging any further.

It is also clear that, in order to arrange the safety gate 10 in an analogous manner but in the opposite sense, one can go from the storage position into the folded-down position and from there into the erect position, where the safety gate will lock under the influence of the gravitational force.

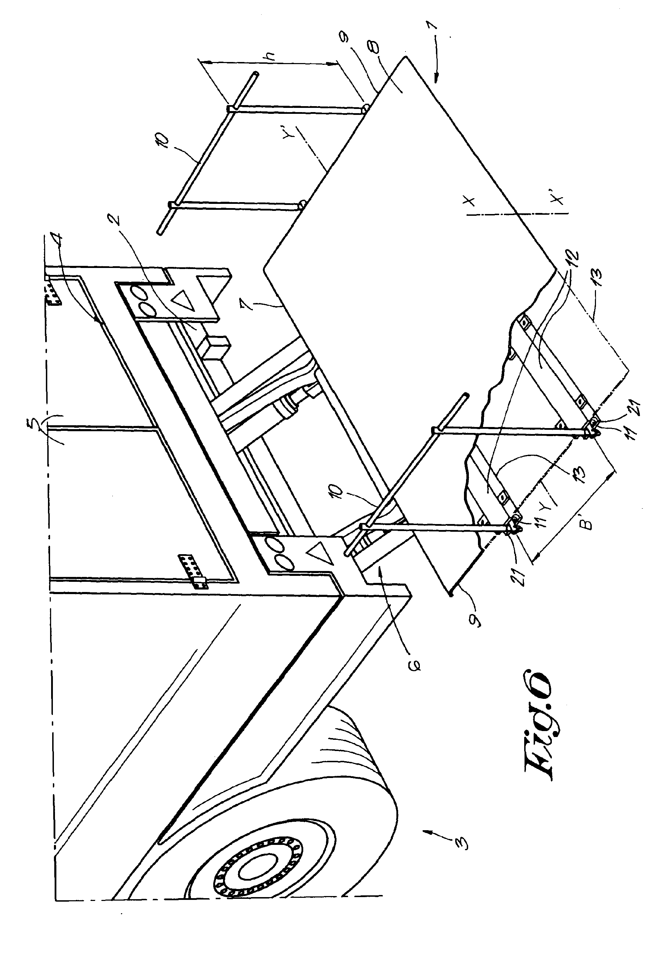

Figure 6 shows an alternative embodiment of figure 1, whereby the safety gate 10 is formed of two lateral tubes and one cross tube and whereby two slides 15 are provided which pass over two parallel axial guides 14 that are fixed under the loading platform 8. These guides are situated at a distance B' from one another, which distance is smaller than the width B of the safety gate 10.

This alternative embodiment with the storage position under the loading platform 8 is advantageous in that one or several safety gates 10 can be provided on existing loading flaps 1 that are not hollow or that must not be made hollow.

As an option, catch means can be provided near the side edge 9 of the loading flap 1 with which the safety gate 10 is locked in the storage position and any undesired sliding out of the storage position can be avoided.

Moreover, provisions can be optionally provided which make the safety gate 10 easily accessible in the storage position, for example in the shape of handles, ropes or recesses along the side edge 9 of the loading flap 1. Nor is it excluded for the safety gates 10 to be folded out and erected automatically instead of manually.

Moreover, it is not excluded for the loading flap to be equipped with an electric interlock system which prevents the loading flap 1 from being lifted or lowered as long as a safety gate 10 is not in its erect position, or vice versa, which prevents the loading flap 1 from being closed as long as a safety gate 10 is not in its stored position, or whereby a safety gate 10 is automatically pulled out at the beginning of the loading and unloading cycle.

In the embodiment described according to the figures, the safety gates 10 are made of metal tubes, but it is clear that they can also be made in another way.

In the embodiment described according to the figures, the locking means 18 work as the spindle 17 on the slide 15 can co-operate with a shaft passage in the hinged far end of the safety gate 10 which is made in the shape of a slip hole 19, but it is clear that the locking means 18 must not necessarily be made in this way.

It should be noted that the loading flap, as described here, may also be what is called a sliding loading flap or a folding loading flap.

The present invention is by no means restricted to the embodiments described as an example and represented in the accompanying drawings; on the contrary, such an improved loading flap with at least one safety gate according to the invention can be made in all sorts of shapes and dimensions while still remaining within the scope of the invention.

## Claims

1. Improved loading flap for a vehicle, whereby the loading flap (1) comprises a loading platform (8) which is provided with at least one safety gate (10), **characterised in that** the safety gate (10) can fold out from an erect position into a folded-down position in the prolongation of the loading platform (8) and can be further pushed in as of this folded-down position in or under the loading platform (8) into a storage position.

2. Loading flap according to claim 1, **characterised in that** the safety gate (10) is provided with at least one hinge point (16) around which the safety gate (10) hinges between the above-mentioned erect position and the folded-down position.

3. Loading flap according to claim 2, **characterised in that** the safety gate (10) is fixed to a slide (15) held in an axial guide (14) by means of the above-mentioned hinge point (16).

4. Loading flap according to claim 3, **characterised in that** the above-mentioned guide (14) extends crosswise to a side edge of the loading platform (8).

5. Loading flap according to claim 3 or 4, **characterised in that** the loading platform (8) has a hollow space (11) confined by an upper wall and a lower wall of the loading platform which are part of the guide (14) of the above-mentioned slide (15).

6. Loading flap according to claim 5, **characterised in that** the guide (14) also has rectilinear guides which extend in the above-mentioned direction crosswise to the side edge and which are provided on the above-mentioned upper and/or lower wall.

7. Loading flap according to any one of claims 4 to 6, **characterised in that** the slide (15) is provided with a stop (20) which can work in conjunction with a stop (21) of the loading platform (8) provided on or near the above-mentioned side edge (9) of the loading platform (8) in order to restrict the axial movement of the slide (15) in the direction of the side edge (9) of the loading platform (8) .

8. Loading flap according to any one of claims 4 to 7, **characterised in that** the slide (15) is provided with a stop (22) which can work in conjunction with a stop (23) of the loading platform situated at a distance from the side edge (9) which distance is at least equal to the height of the safety gate (10).

9. Loading flap according to any one of the preceding claims, **characterised in that** it is provided with locking means (18) for the safety gate (10).

10. Loading flap according to claim 9, **characterised in that** the locking means (18) are automatically activated by the gravitational force in the erect position of the safety gate (10).

11. Loading flap according to claim 10, **characterised in that** the locking means (18) are formed as the hinge point (16) is formed by a spindle (17) which is provided on the slide and which can co-operate in a shifting manner with a shaft passage in the hinged far end of the safety gate (10) which is made in the shape of a slip hole (19).

12. Loading flap according to claims 7 to 11,
**characterised in that** the position of the stop (21) is such that the shaft of the hinge point (16) protrudes from the guide (14) over a distance which is equal to or more or less equal to half the thickness of the safety gate (10).

13. Device according to any one of the preceding claims, **characterised in that** there are provisions to make the safety gate (10) accessible in its storage position.

14. Loading flap according to any one of the preceding claims, **characterised in that** there are also catch means to lock the safety gate (10) in its storage position.
